# EUROPEAN PATENT SPECIFICATION

(11) **EP 3 055 761 B1**
(45) Date of publication and mention of the grant of the patent: **14.08.2019**
(21) Application number: 14852742.7
(22) Date of filing: 10.10.2014
(51) Int. Cl.: G06F 3/048

(54) **FRAMEWORK FOR SCREEN CONTENT SHARING SYSTEM WITH GENERALIZED SCREEN DESCRIPTIONS**
RAHMENWERK FÜR EIN SYSTEM FÜR GEMEINSAME INHALTSNUTZUNG MIT GENERALISIERTEN BILDSCHIRMBESCHREIBUNGEN
INFRASTRUCTURE POUR SYSTÈME DE PARTAGE DE CONTENU D'ÉCRAN COMPORTANT DES DESCRIPTIONS D'ÉCRAN GÉNÉRALISÉES

(30) Priority: 11.10.2013 US 201361890140 P
(43) Date of publication of application: 17.08.2016
(73) Proprietor: Huawei Technologies Co., Ltd., Longgang District Shenzhen, Guangdong 518129 (CN)
(72) Inventor: WANG, Xin, Rancho Palos Verdes, CA 90275 (US); GUAN, Xinjie, Kansas City, MO 64112 (US); WANG, Guoqiang, Santa Clara, CA 95051 (US); YU, Haoping, Carmel, IN 46032 (US)
(74) Representative: Thun, Clemens
(86) International application number: PCT/US2014/060086
(87) International publication number: WO 2015/054604

(56) References cited:
- US-A1- 2004 024 819
- US-A1- 2006 031 779
- US-A1- 2012 001 832
- US-A1- 2012 083 259
- US-A1- 2013 219 303
- US-A1- 2013 238 684

## Description

### CROSS-REFERENCE TO RELATED APPLICATIONS:

### FIELD:

The present invention generally relates to the field of remote screen content sharing. More specifically, the present invention relates to providing screen content sharing with generalized description files among multiple devices.

### BACKGROUND:

Screen content sharing among remote end hosts is an important tool for people to overcome spatial barrier and achieve various tasks, including but not limited to access, remote control, and real-time collaborate among users spread around the world. Many existing technologies and products have been developed to support remote screen content sharing. Basically, they can be divided into two main categories: sharing data to plot on remote monitors and continuously capturing VGA (Video Graphics Array) stream or capturing screen as a sequence of pixel maps.

For example, US 2006/0031779A1 refers to selectively sharing screen data. Further, US 2013/0219303A1 refers to method, apparatus, and system for providing a shared user interface.

Considering the following scenario, Alice wants to share content of her current screen that shows the first slides of a power point document named "Hello World.ppt" with Bob. She can send the document and a message indicating current page number to Bob through networks. Later Bob can render the screen of Alice by playing the document at the specified page. In this scenario, Alice shares her screen content through sharing the content data and auxiliary information. This method is efficient on network bandwidth consumption. However, this puts strict requirements on operating systems and applications setup on the participants. In this example, if Bob does not have appropriate software to open a .ppt file, he will not be able to render Alice's screen content.

An alternative method is to continuously share the captured pixel maps. In the example scenario, Alice captures her screen as an array of pixels and sends a series of pixel maps to Bob, who later renders these pixel maps like playing a video. Compared with sharing data, this method is flexible on software requirements. However, this also takes up large amount of network resources and may degrade display definition. Considering the following case: Alice wants to share her current screen that plays a video in full screen with Bob. If she shares the captured screen pixel maps directly, the upstream of Alice will be heavily consumed. Alternatively, Alice can compress the pixel maps before sharing them to reduce bandwidth consumption, but resolutions and quality of the video will be degraded during encoding and decoding procedures. Specifically, if the video played on Alice's screen is from a network site, e.g. YouTube, routing from Alice's device increases unnecessary load on Alice's computational and network resources.

In general, capturing the entire screen without regard to the screen content leads to the low efficiency of this screen content sharing mechanism because there is not a uniform encoding and compress method that is guaranteed to fit all kinds of screen contents. Considering a case where remote participants share content of a screen, on which there is web page including a paragraph of text, and a video. Directly sending the text has smaller overhead than capturing the screen as a frame and sending the frame. Meanwhile, the video definitions are degraded when using screen capture mechanisms comparing to sharing the original video file. In addition, if the video is a network resource, detouring from a screen content sharing sender raises bandwidth consumption and transmission latency.

Sending original objects and rendering commands among participants are the most time efficient mechanism to sharing screen content. Microsoft Remote Desktop Protocol (MS RDP) rebuilds the screen content using MS graphics device interface (GDI) and redirected text files, audios, videos, mouse movements, and other documents. However, the RDP server needs to be built on MS windows or Linux system. With the support of Apple Airplay, Apple TV could stream video and audio from iPhone, iPad and other devices. Nevertheless, specific contexts are required to use devices like Airplay.

To be applied in a more general context, many screen content sharing mechanisms and systems choose to capture display signals from end host to terminals. For example, NCast captures VGA steams, encodes the captured streams as video streams and plays at the receivers' side. In NCast, screen contents are captured at a fixed rate. VNC uses remote frame buffer protocol (RFB) to capture screen content as a serial of pixel map updates.

### SUMMARY:

To understand screens, content objects on a screen, and their relationships, display attributes and contents were carefully studied. One goal was how to describe screen content in a generic format which could be read and rendered in different operating systems with various applications and other computational contexts. Using abstract screen descriptions, participants with various capacities and contexts can replay the same shared screen content. In addition, they can flexibly subscribe screen content objects in a session and trim the descriptions to play only the parts of the screen content with interests.

An adaptive screen content sharing framework to publish, transmit and render shared screen content has also been designed. This framework consists of four components: applications running on end hosts, control plane, service plane and content plane. A shared screen content is modeled as a tree that consists of many content objects. In addition, children of a node in the tree are contained by the content object represented by this node.

In a first aspect of the present invention a method of sharing screen content performed by a system comprising a control plane, a service plane and a data plane is provided , wherein the method comprises the steps of:
- receiving, by the plane, an update message comprising information about an update of screen content of a fat client from the fat client;
- informing, by the control plane, a thin client and a zero client about the update;
- receiving, by the service plane, interest messages from the thin client and the zero client;
- requesting, by the service plane, a detailed description about the update from the fat client, wherein the detailed description comprises a screen description and a content description;
- receiving, by the service plane, the detailed description about the update from the fat client;
- determining, by the service plane, whether the thin client is able to assemble a shared screen being assembled based on the received screen description and the screen content described by the content description; if yes, sending, by the service plane, the received detailed description to the thin client and sending, by the data plane, the screen content to the thin client;
   if no, trimming, by the service plane, the received detailed description based on a privilege of the thin client and subsequently sending the trimmed detailed description to the thin client and sending, by the data plane, the screen content to the thin client;
- determining, by the service plane, whether the zero client is able to assemble the shared screen being assembled based on the received screen description and the screen content described by the content description;
   if yes, sending, by the service plane, the received detailed description to the zero client and sending, by the data plane, the screen content to the zero client;
   if no, assembling, by the service plane, the shared screen based on the received screen description and the screen content received by the service plane from the data plane;
   capturing, by the service plane, pixel maps of the shared screen in a sampling rate;
sending, by the service plane, the pixel maps as a streaming video to the zero client.

In a second aspect a system configured to perform that method is provided.

### BRIEF DESCRIPTION OF THE DRAWINGS:

The accompanying drawings, which are incorporated in and form a part of this specification, illustrate embodiments of the invention and, together with the description, serve to explain the principles of the invention:
Figure 1 is a diagram illustrating an exemplary computing system upon which embodiments of the present invention may be implemented.
Figure 2 is a diagram illustrating an exemplary screen for sharing based on Microsoft Windows OS and an associated tree structure description according to embodiments of the present invention.
Figure 3 is pseudo-code representing an exemplary description of the screen content in Figure 2 according to embodiments of the present invention.
Figure 4A is pseudo-code representing an exemplary description of a screen content update when opening a new project according to embodiments of the present invention.
Figure 4B is pseudo-code representing an exemplary description of a screen content update wherein the privilege setting of an object is changed according to embodiments of the present invention.
Figure 4C is pseudo-code representing an exemplary description of a screen content update when an object is resized according to embodiments of the present invention.
Figure 4D is pseudo-code representing an exemplary description of a screen content update when a user has scrolled down according to embodiments of the present invention.
Figure 4E is pseudo-code representing an exemplary description of a screen content update when the content of an object has changed according to embodiments of the present invention.
Figure 5 is a diagram representing exemplary components of a screen content sharing system and communications among the various components according to embodiments of the present invention.
Figure 6 is a diagram representing an exemplary structure of a screen content sharing control server according to embodiments of the present invention.
Figure 7 is a diagram representing an exemplary structure of a fat client according to embodiments of the present invention.
Figure 8A is a diagram representing an exemplary structure of a thin client according to embodiments of the present invention.
Figure 8B is a diagram representing an exemplary structure of a zero client according to embodiments of the present invention.
Figure 9A is a flow chart representing an exemplary sequence of activities for displaying a shared screen content using a screen description player according to embodiments of the present invention.
Figure 9B is a flow chart representing an exemplary sequence of activities for displaying a screen content object using a screen description player according to embodiments of the present invention.
Figure 10 is a diagram representing an exemplary structure of a screen content sharing framework built on an ICN according to embodiments of the present invention.
Figure 11A is a flow chart representing an exemplary sequence of activities for publishing an update from a fat client according to embodiments of the present invention.

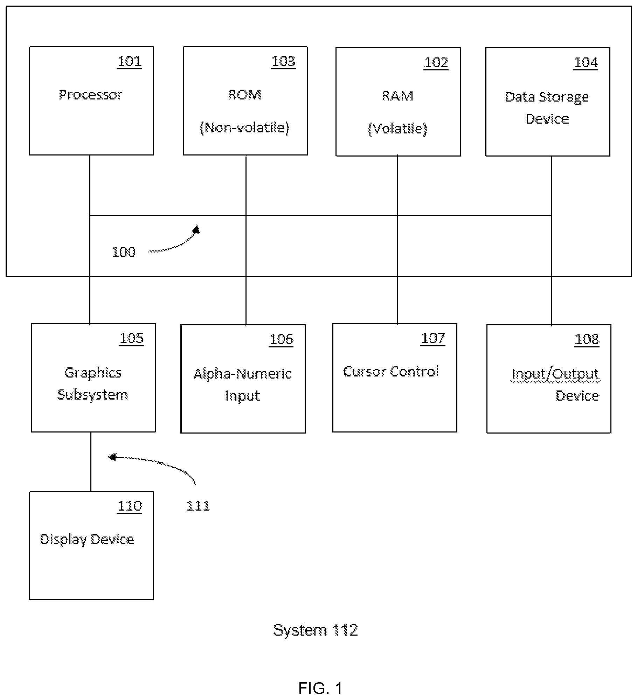

Figure 1 IB is a flow chart representing an exemplary sequence of activities for publishing an update from a thin client according to embodiments of the present invention.

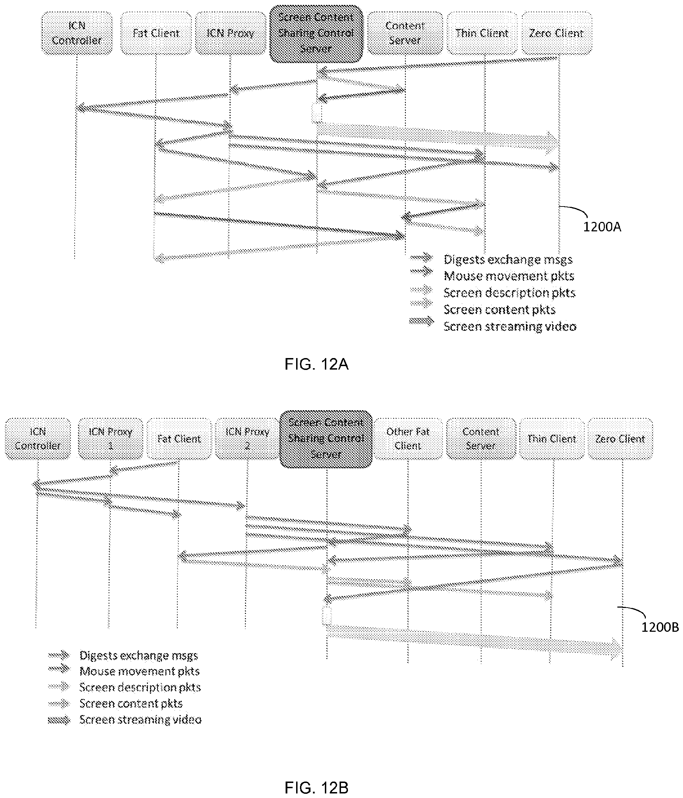

Figure 12A is a flow chart representing an exemplary sequence of activities for publishing an update from a zero client according to embodiments of the present invention.
Figure 12B is a flow chart representing an exemplary sequence of activities for publishing a screen description update from a fat client according to embodiments of the present invention.

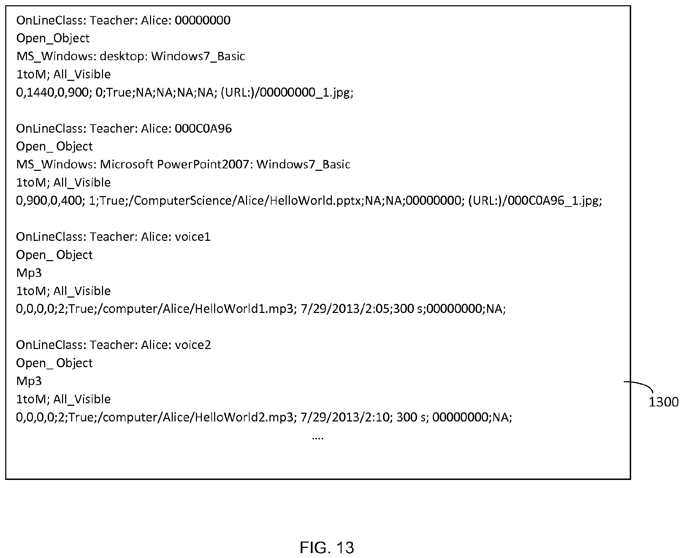

Figure 13 is pseudo-code representing an exemplary complete description of a screen content shared in an online lecture according to embodiments of the present invention.

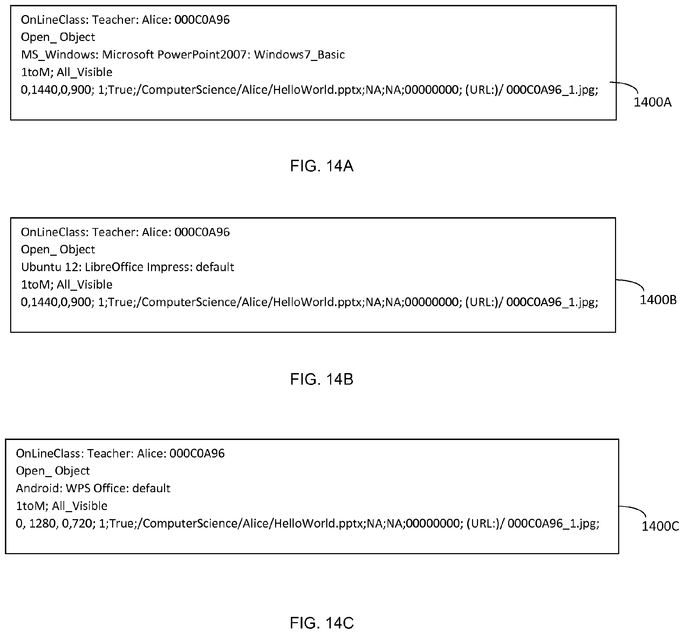

Figure 14A is pseudo-code representing an exemplary description of a screen content update wherein an object is resized according to embodiments of the present invention.
Figure 14B is pseudo-code representing an exemplary description that has been interpreted for a laptop running Ubuntu 12 according to embodiments of the present invention.
Figure 14C is pseudo-code representing an exemplary description that has been interpreted for a tablet running Android according to embodiments of the present invention.

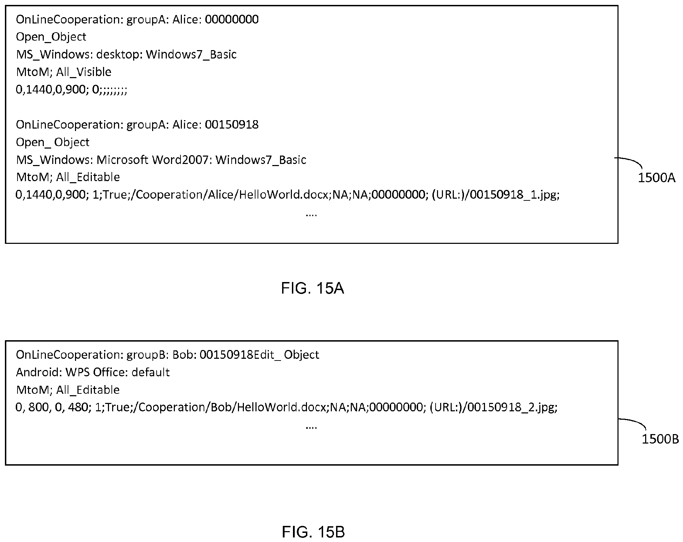

Figure 15A is pseudo-code representing an exemplary description of a complete description of a screen content published by a user Alice in an on-line cooperation according to embodiments of the present invention.
Figure 15B is pseudo-code representing an exemplary description of a screen content object update published by Bob in an on-line cooperation according to embodiments of the present invention.

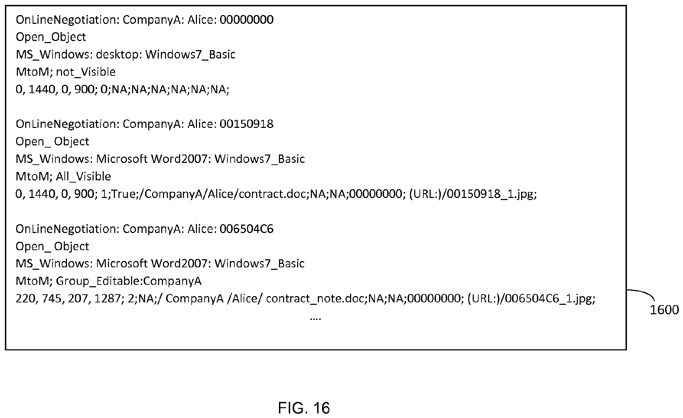

Figure 16 is pseudo-code representing an exemplary complete description of the screen content published by a user Alice in an on-line negotiation according to embodiments of the present invention.

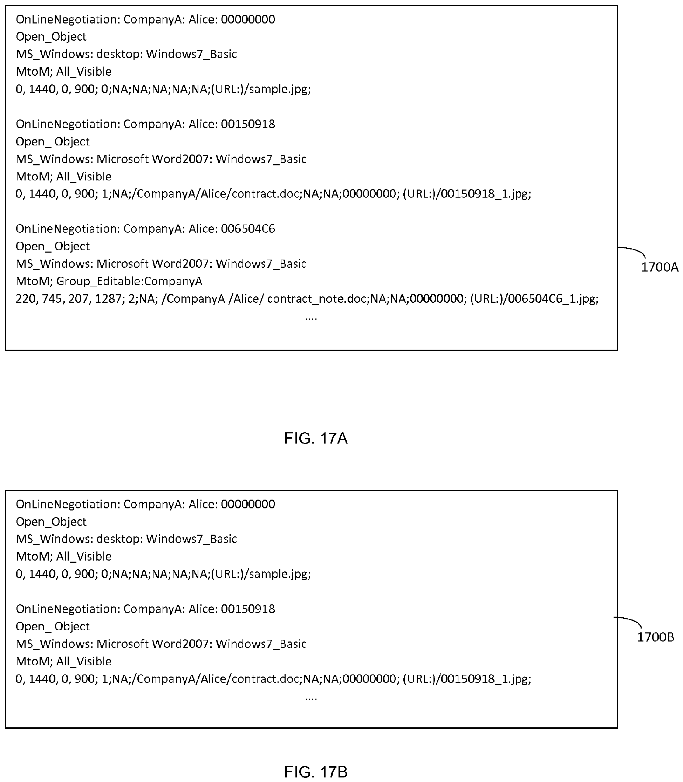

Figure 17A is pseudo-code representing an exemplary trimmed description for members of a Company A in an on-line negotiation according to embodiments of the present invention.
Figure 17B is pseudo-code representing an exemplary trimmed description for members of a Company B in an on-line negotiation according to embodiments of the present invention.

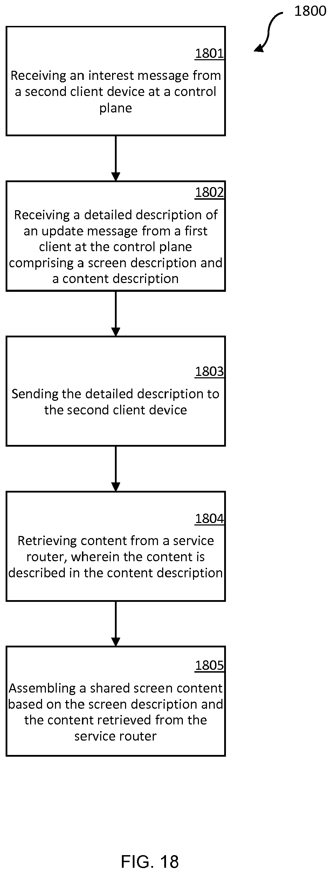

Figure 18 is a flowchart depicting an exemplary method for sharing screen content according to embodiments of the present invention.

### DETAILED DESCRIPTION:

Furthermore, in the following detailed description, numerous specific details are set forth in order to provide a thorough understanding of the claimed subject matter. However, it will be recognized by one skilled in the art that embodiments may be practiced without these specific details or with equivalents thereof. In other instances, well-known methods, procedures, components, and circuits have not been described in detail as not to unnecessarily obscure aspects and features of the subject matter.

Portions of the detailed description that follows are presented and discussed in terms of a method. Although steps and sequencing thereof are disclosed in a figure herein describing the operations of this method, such steps and sequencing are exemplary. Embodiments are well suited to performing various other steps or variations of the steps recited in the flowchart (e.g., Figure 18) of the figures herein, and in a sequence other than that depicted and described herein.

Some portions of the detailed description are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer-executed step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout, discussions utilizing terms such as "accessing," "writing," "including," "storing," "transmitting," "traversing," "associating," "identifying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Computing devices, such as computer system 112, typically include at least some form of computer readable media. Computer readable media can be any available media that can be accessed by a computing device. By way of example, and not limitation, computer readable medium may comprise computer storage media and communication media. Computer storage media includes volatile and nonvolatile, removable and non-removable media implemented in any method or technology for storage of information such as computer readable instructions, data structures, program modules, or other data. Computer storage media includes, but is not limited to, RAM, ROM, NVRAM, EEPROM, flash memory or other memory technology, CD-ROM, digital versatile discs (DVD) or other optical storage, magnetic cassettes, magnetic tape, magnetic disk storage or other magnetic storage devices, or any other medium which can be used to store the desired information and which can be accessed by a computing device. Communication media typically embodies computer readable instructions, data structures, program modules, or other data in a modulated data signals such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above should also be included within the scope of computer readable media.

In the example of Figure 1, the exemplary computer system 112 includes a central processing unit (CPU) 101 for running software applications and optionally an operating system. Memory 102/103 stores applications and data for use by the CPU 101. Storage 104 provides nonvolatile storage for applications and data and may include fixed disk drives, removable disk drives, flash memory devices, and CD-ROM, DVD-ROM or other optical storage devices. The optional user inputs 106 and 107 include devices that communicate inputs from one or more users to the computer system 112 and may include keyboards, mice, joysticks, cameras, touch screens, and/or microphones.

Some embodiments may be described in the general context of computer-executable instructions, such as program modules, executed by one or more computers or other devices. Generally, program modules include routines, programs, objects, components, data structures, etc. that perform particular tasks or implement particular abstract data types. Typically the functionality of the program modules may be combined or distributed as desired in various embodiments.

### FRAMEWORK FOR SCREEN CONTENT SHARING SYSTEM WITH GENERALIZED SCREEN DESCRIPTIONS

In the following embodiments, an approach is described for sharing screen content across multiple devices using generalized screen descriptions. This approach routes an update message from a client device to a control plane where the client device wishes to share its screen content with a remote device. The remote device sends a message indicating an interest in receiving said update. The control plane subsequently retrieves a detailed screen description from the client device. Based on the computational context of the remote device, the detailed description may be trimmed to a more compatible format. In some embodiments, the detailed description is sent to the remote device and includes a screen description and a content description. The content of the shared screen is described and the content is subsequently retrieved from a service router. A shared screen content is assembled based on the screen description and the content retrieved from the service router.

### Modeling on-screen content objects

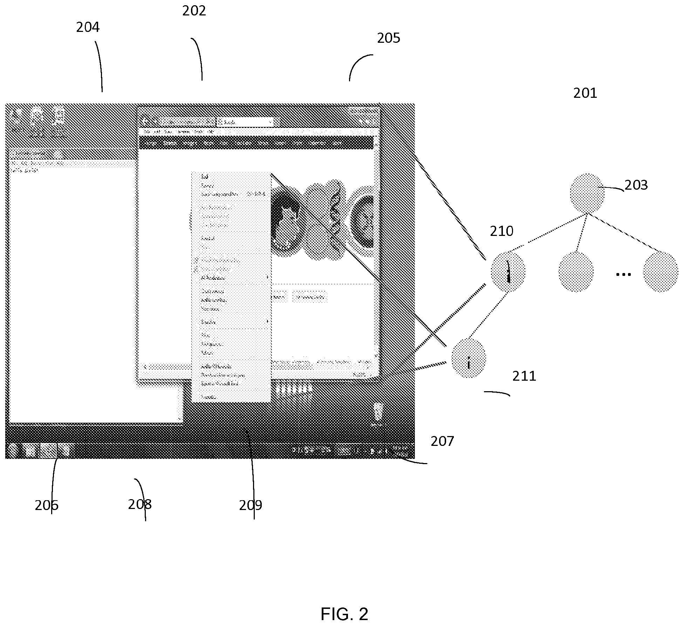

With reference now to Figure 2, each node in tree 201 is mapped from a screen content object in the screen 202. The containing relationships between two screen content objects are represented as parent-children relationships in the tree. The root 203 of the tree is the desktop 204 of the screen content object that containing any other objects on the screen. The desktop contains two windows 205 and 206, icons 207, task bar 208 and other content objects; the menu 209 contained by IE Explorer is abstracted as a child 211 of node 210.

Note that one object can be contained in other object. In the above IE explorer example, when a user right clicks the mouse, a menu will be displayed. This menu can be seen as a new object contained in IE explorer. Based on these observations, a shared screen content is modeled as a tree that consists of many content objects. In addition, children of a node in the tree are contained by the content object represented by this node. Figure 2 illustrates how the screen content (left side) is abstracted as a tree (right side).

The tree structure abstracts the containing relationships among screen content objects. Besides these relationships, detailed display attributes and real contents of each object are needed to describe and render the shared screen content. According to one embodiment, descriptions of an object from five aspects are necessary: who did what at where for whom and how. Although some specific attributes are shown, the list of attributes can be extended and more or different attributes can be considered for different scenarios.
- Who: session id; group id; creator's ID of this object; object id
- What: open/close a window; move/resize a window; scroll up/down; bring a window to front/send a window to back; changed content
- Where: OS; required apps; environment setting in the OS/apps
- Whom: mode (one-to-multiple; multiple-to-multiple); privilege of different participants
- How: location, z-order, transparent; content; start time, duration, timestamp (PST); parent; an image of this object

The roles of these aspects and attributes can be explained as follows: "Who" identifies the participant who creates this object and provides the object ID, so that other participants can query this object. Since a person may involves in multiple screen content sharing sessions and may participant in multiple groups in a session, session ID and group id are needed as well as the global unique user ID and object ID to name or search the object.

To eliminate repeat download work, incremental updates are enabled by indicating "what" change has been made on the shared screen. The change could be creating or removing an object, changing the display attributes of an existing object, or updating the contents of an existing object. Participants in a session may with different capacities and contexts. Therefore, the publisher of a description needs to explicate the proper context in "where" aspect. Screen content sharing server can translate the display attributes in publisher's context to receivers' context before sharing with them. Here, operating system is the main attribute to describe the participants' contexts. Whereas, based on required applications and environments setting listed in "where" aspect, receivers can choose a proper rendering method to display the shared screen. The detail about using these attributes and rendering the shared screen will be discussed in greater detail below.

Considering multiple groups may involve in the same session with different roles, it is necessary to specify that "whom" are eligible to receive the shared screen. Online lecture and multi-group meeting are two classic usage scenarios, which represent one-to-multiple mode (or master- and-slave) and multiple-to-multiple mode respectively. In the default setting of one-to-multiple, only master node can create, publish, and change screen description; while the other participants only have the privilege to view the shared screen. However, the master node can assign individual participant or group privilege to edit specific object(s). In multiple-to-multiple mode, the creator of an object needs to assign the privilege of the published object. The privilege can be all visible, not visible, group_visible, individual_visible, all_editable, group_editable, and individual_editable. For group visible and group_editable, it is necessary to further indicate which group(s) can check or edit this object; while for individual_visible and individual_editable, it is necessary to further indicate which participant can check or edit this object.

Attributes in "How" aspect guide the displaying of an object in a shared screen. In detail, the publisher provides: display related attributes, including locations (left, right, up, down coordinates), z-order (the coverage relationships among objects in a window), transparent; and content (name and URL); parameters for synchronization of multimedia objects, including start time, duration, and timestamp (Presentation Timestamp (PTS)). In addition, parent of this object in the description tree is given, when a participant publishes a change to an existing shared screen. Then the screen control server knows which object has been changed. The publisher also needs to capture and store an image of this object. When a receiver does not have required OS or application, he/she can replay the object with captured image. The detail of rendering a shared object will be further explained below.

Note that the display attributes and contents given are captured in the context specified in "where" aspect. Therefore, they cannot be directly used by a participant with different context. To solve this problem, screen content sharing control servers provide the service to translate and trim the shared screen descriptions, so that receivers with different context can properly display the shared screen on their monitors. Details of presentation and replay a screen will be illustrated in the following section.

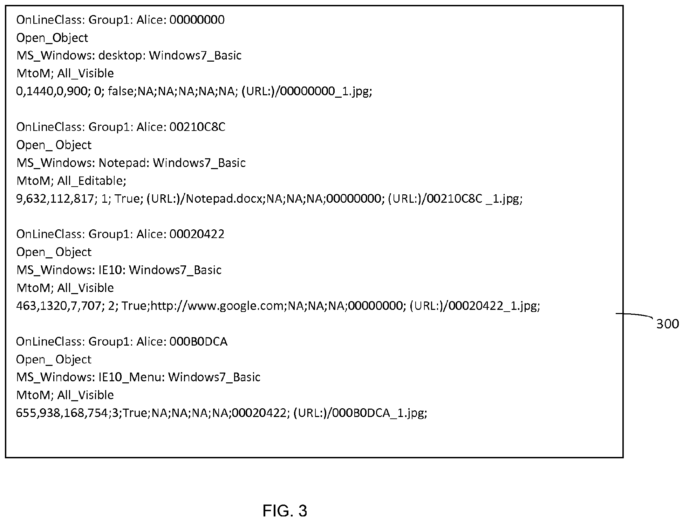

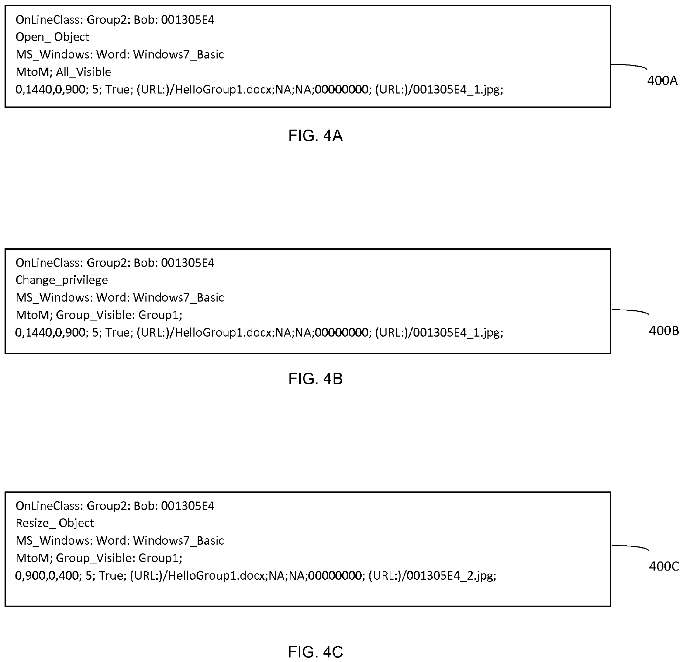

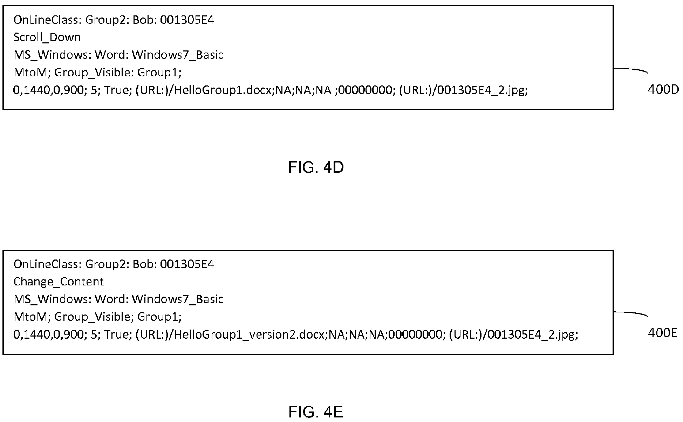

Figure 3 depicts an example of a complete description 300 of the screen in Figure 2, while Figure 4A, 4B, 4C, 4D and 4E are examples of descriptions for screen object updates. In particular, receivers with privilege can change the control information of an object (Figure 4A - 4D) or change the real content played or displayed in an object (Figure 4E). In these examples, screen descriptions are given in plain text. But in practical, Extensible Markup Language (XML) can be used to specify these attributes. A screen description can be a complete abstraction of a screen or an update to an already published screen description.

As an example, Alice publishes a complete description (in Figure 3) of her screen (in Figure 2, left side). As shown in Figure 3, this is a multiple-to-multiple session. Moreover, there are four screen objects on the shared screen including one desktop, which is the root of screen description tree in Figure 2 (right side), a notepad window, a IE window and a menu contained by the IE window. The notepad window is set to be editable by the Group2; while the other objects can only be viewed by the other participants except the creator. Since all the four objects do not contain multimedia content, all synchronized attributes are left to blank.

In the shared screen, Bob opens a new window and publishes this change as described in description 400A of Figure 4A. The published object is a word document and put at the top of the screen. The content of this object is located at (URL:)/HelloGroup1 .docx. Bob also captures a pixel map of this object and stores at (URL:)/001305E4_1.jpg. The change is set to be visible by everyone in this session. Later, Bob wants to change the privilege of the new object that can only viewed by the Group 1. He publishes a description 400B as shown in Figure 4B indicating the change of privilege. Bob also changes the size of the window, and scroll down. These changes have been published using the description 400C and 400D in Figures 4C and 4D, respectively. Note that when the view of an object is changed, for example, resize a window; a new pixel map will be captured and recorded for receivers with limited capacities.

### System models:

The screen content sharing framework consists of four components: end hosts with various capacities (application side); control plane that processes updates publication related issues; service plane that provides a group of servers to make the sharing of screen more flexible and adaptive to various contexts; and data plane that assists the transmission of object contents. The services provided by service plane include maintaining session view descriptions, and adaptively trimming session view descriptions to group view descriptions based on end hosts' computational and network context. In addition, for zero clients, service plane produces pixel map videos based on group view descriptions, and sends compressed videos to them.

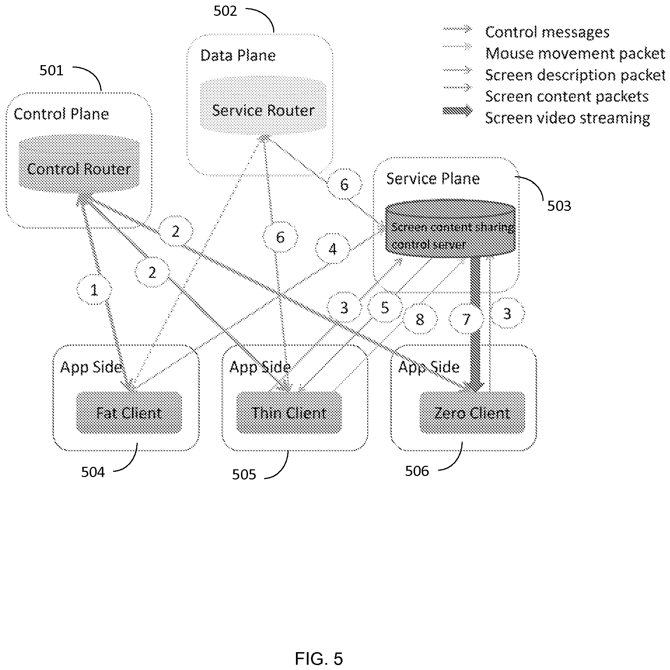

The structure of the content screen sharing framework and communications between the four components are presented in Figure 5. Note that Figure 5 depicts three kinds of clients: fat clients, thin clients, and zero clients to illustrate how our framework adaptively server clients with various capacities and context. The corresponding contexts and capacities of different clients are summarized as following:
Fat clients: Regular OS, e.g. MS windows, Mac OS, Linux; common applications to process texts, figures, videos and other regular format files, e.g. MS word, MAC iWork, Ubuntu vim
Thin clients: Trimmed OS, e.g. iOS, android; media player with certain graph process ability
Zero clients: Bios; media player with limited graph process ability

Control plane 501, service plane 503 and data plane 502 may be implemented on the same end hosts in a data center. However, the three planes may be separated logically to avoid network ossification and improve transmission efficiency. A solution that builds the three planes in an Information Centric Network (ICN) is discussed below. However, the implementation of the framework is not limited to ICNs.

Figure 5 depicts the functions of four exemplary components and the communications among them according to one embodiment. As depicted in Figure 5, a fat client 504 publishes a description that a complete screen description or a change to an existing shared screen:
(1) He/she sends a message to inform control plane 501 that he/she has an update. This message can be a digest including hash of the description along with the publisher's ID and timestamp as used in named data networking [4];
(2) Control plane 501 informs the other participants, a thin client 505 and a zero client 506 in this example, about this update along with the publisher's ID;
(3) The two participants (e.g., clients 505 and 506) send their interests about the update to screen content sharing control server in service plane;
(4) Screen content sharing control server 503 requests and receives the detailed description about this update from the publisher (e.g., client 504);
(5) Based on the computational context of end hosts, screen content sharing control server 503 may trim the received description based on the thin client's privilege, and send the processed description to the thin client 505;
(6) The thin client 505 is able to assemble the shared screen from its viewpoint with received screen description and necessary contents from service routers;
(7) On the other hand, for a zero client 506 who does not have the ability to assemble the shared screen, screen content sharing control server assembles the screen, captures the pixel maps of screen in certain sampling rate, and sends the pixel maps as streaming video to the zero client 506;
(8) In addition, mouse movements can be collected and updated through separate packets and integrated in to the shared screen during rendering phase.

From the example in Figure 5, the main procedures of adaptively sharing a screen into three steps are summarized: information collection and screen description generation; publication and transmission of descriptions and contents; screen rendering and participants' synchronization. The tasks completed in each phase and the involved components are summarized as follows:
Information collection and screen description generation:
- Collect the attributes for all objects on a screen or recognize the change of an existing object
- Generate screen descriptions in the standard format using the collected attributes
- For fat clients, these tasks are completed by themselves, while for thin clients and zero clients, these tasks are completed remotely by screen content sharing control servers

Publication and transmission of descriptions and contents:
- Publishers inform control plane 501 about updates by sending digests
- Control plane 501 spreads digests to all participants in the session
- Participants send interests to screen content sharing control servers in service plane 503
- A screen content sharing control server (e.g., control server 503) checks if the requested updates are replicated in local. If not yet, it contacts the publisher of these updates and retrieve the updates
- The Screen content sharing control server 503 later trims the received session view description to group view description based on end host's context, and sends the trimmed descriptions to clients
- In particular, if the end host is a zero client, screen content sharing control sever 503 captures and records the screen as pixel map videos, finally sends the pixel maps in streaming video to zero client

Screen rendering and participants' synchronization:
- After receiving group view description, fat client and thin client may need to request certain contents from data plane. When they get all necessary contents, they are ready to present screen on their desktop through corresponding applications or screen content sharing description player
- PST or other timestamps can be embedded into descriptions to help synchronization among multiple end hosts

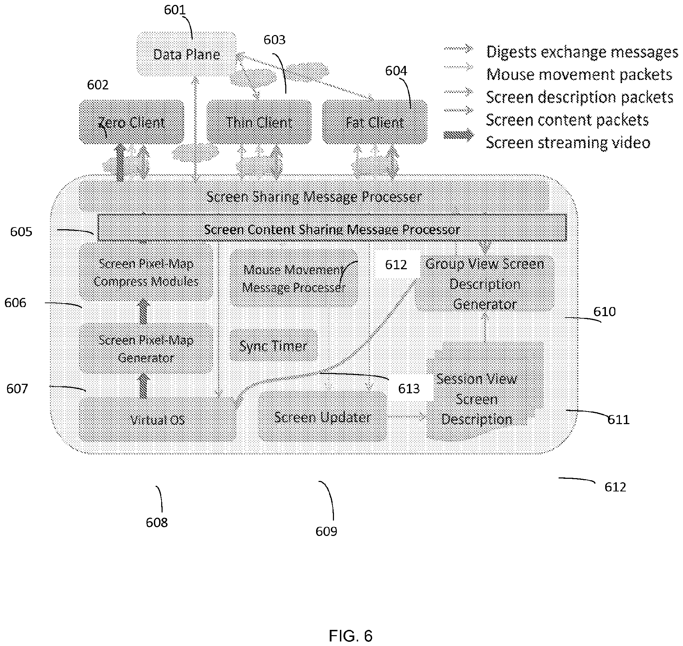

Turning now to Figure 6, a detailed structure of an exemplary screen content sharing control server, including fat/thin/zero clients, is described. A screen content sharing control server 612 having a screen content sharing message processer 605 receives four kinds of messages: control messages, screen descriptions, mouse movement messages and content packets. The screen content sharing message processer processes these messages, passes attributes to other modules, and sends proper responses to fat clients 604, thin clients 603, and video streaming to zero clients 602. When a request is received for a screen description from a client, it checks if this description is replicated at local memory. If not, it will forward this request to the proper network location(s) and keep the context information of the client who sends the request. This information later will be passed to session screen description generator.

When the responds for the requested description is received, the message processer passes it to screen updater 609. The message processer also takes charge of passing mouse movement information to mouse movement message processer 612.

Furthermore, the message processer assists zero clients 602 by requesting screen contents and the received screen contents will be passed to the virtual OS 608. Additionally, it streams the compressed pixel map videos to zero clients 602 who request the screen contents.

A mouse movement processer 612 extracts mouse locations and events from mouse movement messages, and passes these attributes to the screen updater 609.

A screen updater 609 updates session view screen descriptions 611 based on received screen descriptions, update messages and mouse attributes. The updated session view screen descriptions along with mouse locations are used to generate group view screen descriptions. In addition, the session view screen descriptions 611 will be cached in local memory for certain time duration to reduce repeat download work and off-load network overhead.

A group view description generator 610 trims session view screen descriptions based on the client's group ID, and privilege set for each screen object in session view screen descriptions 611. The trimmed group view description will be sent to the requested client through screen content sharing message processer 605 if the client who requests the description is a fat client 604 or a thin client 603. Or it will be passed to virtual OS to produce pixel map video if the requesting client is a zero client 602.

A virtual OS 608, a screen pixel map generator 607 and screen pixel map compress modules 606 recover the screen based on group view descriptions and contents retrieved by screen content sharing message processer 605, capture the screen as pixel maps, compress the pixel maps and send the compressed pixel maps to screen content sharing message processer 605 who will set connections to the zero client 602 and transmit the pixel maps.

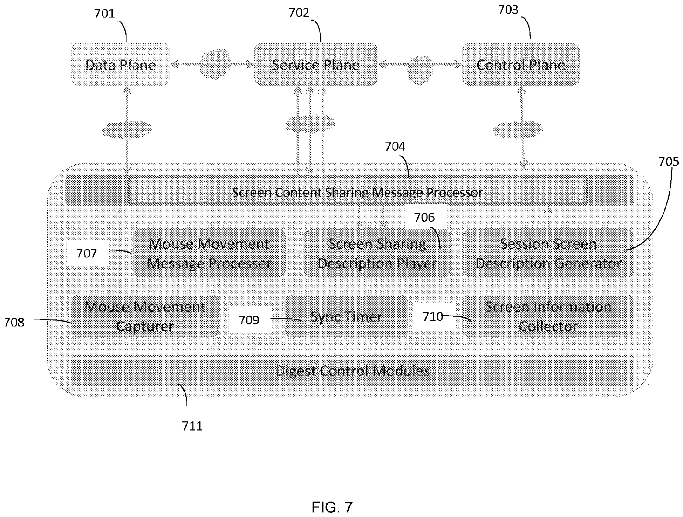

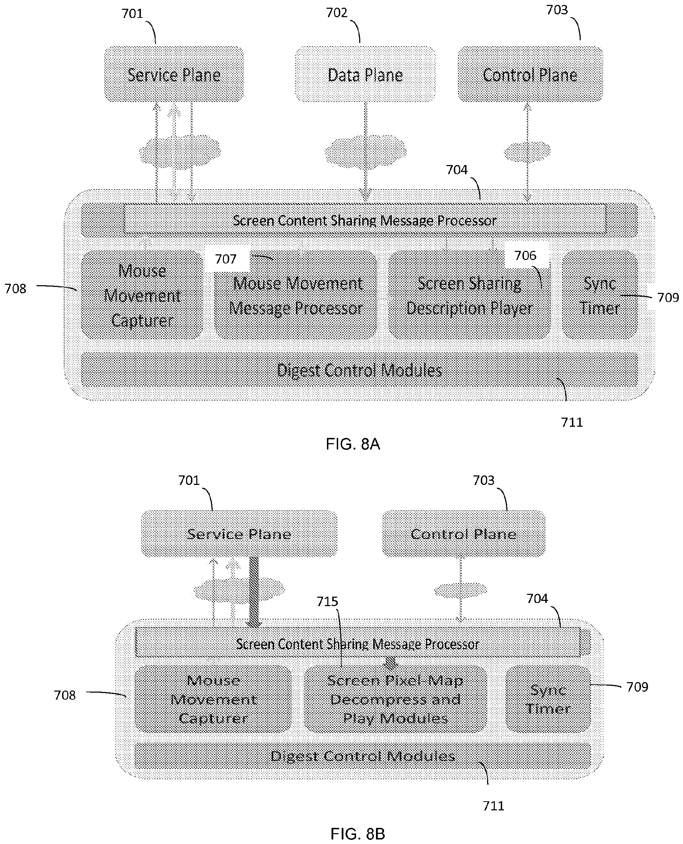

A synchronization timer 613 is used to assist the synchronization between videos and audios and also it will assist the synchronization among clients in a same session. The structure of fat clients, thin clients and zero clients are presented in Figure 7, 8A, and 8B. These figures have some common modules with screen content sharing control servers, including: screen content sharing message processer 704, mouse movement message processer 707, and synchronization timers 709. They provide generally the same functions as the screen content sharing control servers. In addition, all kinds of clients have mouse movement capturers 708. This module captures and records mouse coordinates and events including right click, left click, scroll and drag. The captured mouse movements will be passed to screen content sharing message processer 704 and packaged as mouse movement messages.

The modules for publishing updates are separated and their interest in subscribing these updates into the Digest control modules 711 is communicated. For access control, all the interests will be submitted to screen content sharing control servers, who further request screen descriptions from other screen control servers or fat clients. Digest control modules 711 are deployed on all kinds of clients so that clients can flexibly determine which screens/updates to be received.

For a fat client who is equipped with a full version OS and requested applications, the screen content sharing description player can use local libraries and styles in the OS or applications, and reconstruct the original screen using the screen description received from a screen content sharing control server in service plane and contents received from data plane through screen content sharing message processer 704. In addition, the screen content sharing description player can port mouse movement from other clients with the assistance of the mouse movement message processer 707. On the other hand, since the fat client has a full OS and applications, it can generate screen description without the help of screen content sharing control server.

As shown in Figure 7, in some embodiments, a screen information collector 710 will draw necessary attributes of running processes, and pass these attributes to the session screen description generator 705, which composes the screen description.

With regard to Figure 8A, an exemplary thin client connected to service plane 701, data plane 702, and control plane 703 is depicted according to embodiments of the present invention. A screen content sharing description player 706 is deployed on a thin client. However, a thin client only has a trimmed OS, and usually do not have required applications. If the thin client has the style libraries, it can draw the frame using style libraries and display the content with other alternative applications. For example, a MS word document can be opened by Linux VIM and displayed in a frame with MS style. If the style libraries are not deployed on the thin client, it can use the captured screen pixel map to recover the frame of the screen objects. But in order to save bandwidth, the content of this screen object, can be opened with other alternative applications. As depicted in Figure 8A, a thin client may further comprises a screen content sharing message processor 704, a mouse movement capturer 708, a mouse movement message processor 707, a sync timer 709, and digest control modules 711.

Figure 8B depicts an exemplary zero client connected to service plane 701 and control plane 703 according to embodiments of the present invention. The thin client may comprise screen sharing content message processor 704, mouse movement capturer 708, sync timer 709, and digest control modules 711. A thin client may further comprise screen pixel-map decompress and play modules 715 for decompressing shared pixel maps and/or rendering shared screen content.

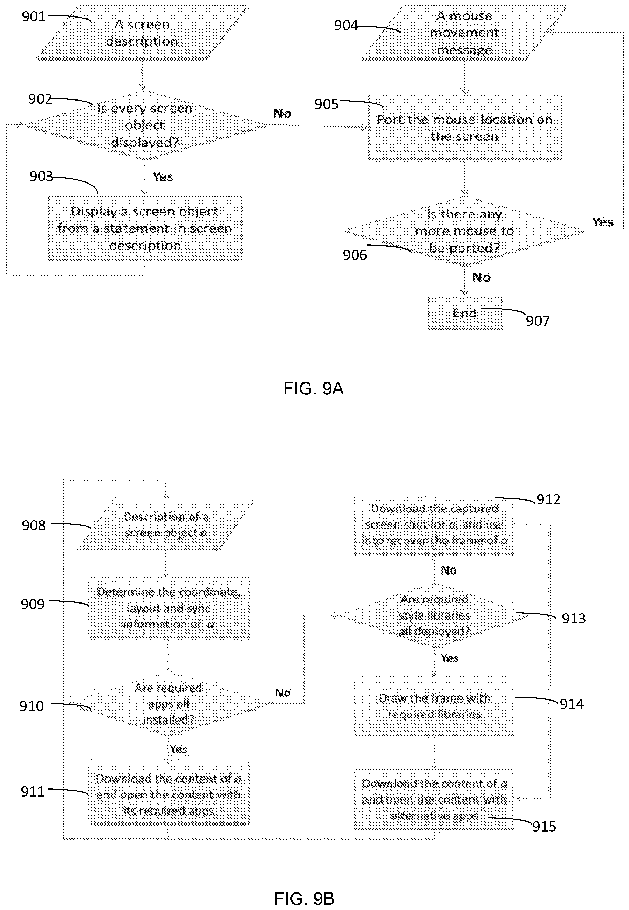

The flow chart of screen description player is illustrated in Figure 9A. The flow chart of activities when the screen description player displays a screen object is depicted in Figure 9B. For a zero client, who only has a BIOS and media player with certain graph process ability, modules are need to decompress and play the streaming video of captured screen pixel maps received from a screen content sharing control server.

Referring now to Figure 9A, at step 901, a screen description is received. At step 902, a determination is made as to whether every screen object is displayed. If so, the process proceeds to step 903, where a screen object is displayed from a statement in the screen description. If every screen object is not displayed, at step 905, the mouse location on the screen is ported. At step 906, a determination is made as to whether there is any mouse movement to be ported. If so, at step 904, a mouse movement message is received and the process continues at step 905. If there are no mouse movements to be ported, the process ends at step 907.

Referring now to Figure 9B, at step 908, a description of a screen object *a* is received. Continuing to step 909, the coordinates, layout and sync information of *a* is determined. At step 910, a determination is made as to whether all required apps are installed. If so, at step 911, the contents of *a* are downloaded and opened with the required apps. If all required apps are not installed, at step 913, a determination is made as to whether all required style libraries are deployed. If so, the process continues at step 914 and the frame is drawn with the required style libraries. Next, at step 15, the content of *a* is downloaded and opened with alternative apps. If all required style libraries are not present, at step 912, a captured screenshot of *a* is downloaded and used to recover the frame of *a.*

### Publication and transmission of descriptions and contents

As presented above, the main procedures of the adaptive screen content sharing framework can be summarized into three steps: information collection and screen descriptions generation; publication and transmission of descriptions and contents; screen rendering and synchronizing. Information collection and screen description generation, and screen rendering and synchronizing are completed at local hosts; while publishing and transmitting screen description and contents need the assistant of networks.

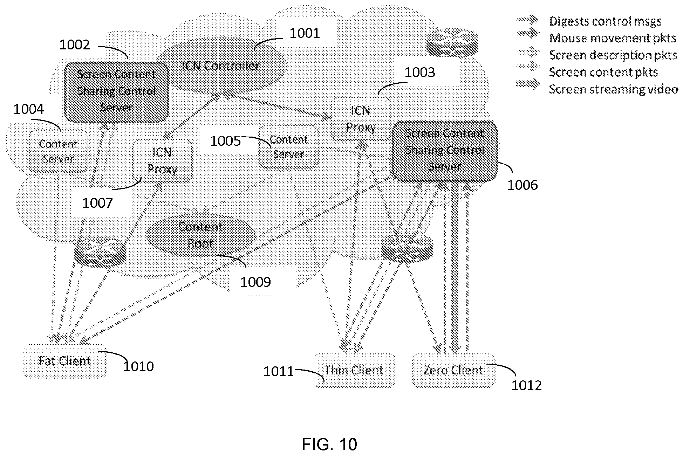

Different kinds of networks, topologies and techniques can be used to support the adaptive screen content sharing system. Figure 10 depicts using an ICN to publish and transmit screen descriptions according to one embodiment. However, the disclosed implementations of the framework are not limited to ICNs.

As shown in Figure 10, when a fat client 1010 has a screen update or it publishes a new screen description, it notifies an ICN proxy 1007 about the change by sending a digest including the identification of fat client 1010. The ICN proxy 1007 to be notified may be the nearest one, the least overloaded one or others according to ICN routing polices. The selected ICN proxy 1007 then forwards the digest along with its identification to the ICN controller 1010 who computes a new digest and pushes the digest to all ICN proxies (e.g. ICN Proxy 1003).

When receiving a digest from a controller (e.g. control server 1002 or 1006), an ICN proxy (e.g., ICN Proxy 1007) pushes this digest to the clients that logically connect to the ICN proxy (e.g., client 1010). Those clients decide independently whether or not subscribe the update. If a client wants to receive an update, he/she will send an interest to a screen content sharing control server 1006 who later contacts the publisher of this update to request the description of this update. The selection of screen content sharing control server can based on varies polices, e.g. the nearest one, the least overloaded one. If a screen content sharing control server receives multiple interests for the same update, it contacts the publisher for only once. Once it receives the description of this update, the server caches this description and satisfies all the interests with the cached description. In this way, congestion is avoided and repeat download work is reduced.

When a screen description has been received by a client, the client resolves the description and may find that some contents are needed to build the origin screen. The contents are named based on ICN naming polices for efficient inter-domain routing, and content servers 1004 and 1005 support in-network caching for efficient and fast network transmission. Only the first request received by a content server for a content c will be forwarded towards the location of c's replicate in the network. The replica of c will be pulled towards the client. At the same time, in order to reduce bandwidth consumption, in-network content severs could cache replica of c for possible requests for the same content in the future.

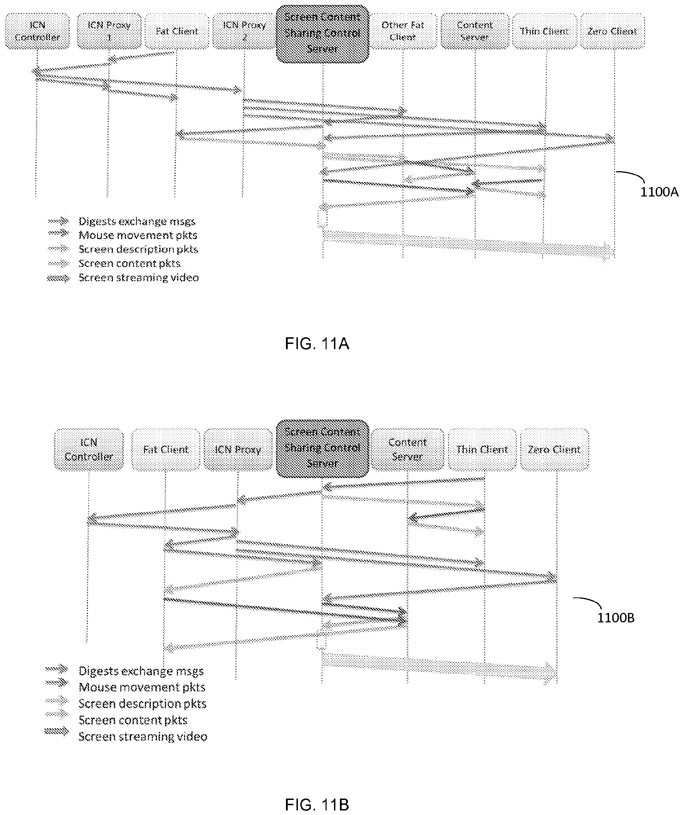

In Figures 11A, 11B, 12A, and 12B, typical updates are published from clients with various capacities and contexts. Here a typical update may be a completed description of a shared screen or an update to an existing description.

As shown in chart 1100A of Figure 11A, a fat client publishes an update and sends a digest to an ICN proxy. The ICN proxy informs the ICN controller by forwarding the digest. The digest is later pushed from ICN controller to each client through proxies. The clients who are interested in the update contact the screen content sharing control server, who will request the update/description from the publisher. In the example in Figure 11A, the publisher is a fat client. When receiving the update/description, screen content sharing control server processes the update/description for different end clients, and sends processed update/description to fat/thin clients and streaming video to zero clients. Fat/thin clients may further contact content servers for real contents.

Since thin clients run trimmed OS and usually do not have required applications, they send mouse movement message to a screen content sharing control server as shown in chart 1100B of Figure 11B. Then the screen content sharing server updates the screen, and sends back the updated screen description file to the thin client. The thin client may need to download some content from content server when replaying the updated description. At the same time, instead of the thin client, screen content sharing control server publishes this update as a publisher by sending a digest to an ICN proxy. The following processes are similar with that for an update from a fat client.

The work flow for publishing an update from a zero client is similar to that from a thin client as shown in chart 1200A of Figure 12A. The only difference is that screen content sharing control server will retrieve the necessary content from a content server and stream the video to the zero client.

Additionally, if a published update is only a change to display attributes, or privilege of an object but not to a screen content, the clients or the screen content sharing control server do not need to query content servers for downloading content again. The detailed timeline for updating a screen description from a fat client is presented in chart 1200B of Figure 12B. The procedures for updating from a thin or a zero client are similar, thus omit in this report.

### Exemplary scenarios

This section illustrates how the screen content sharing system can be used in the following three example scenarios: On-line lecture, On-line cooperation, and On-line negotiation

### A. On-line lecture

An on-line lecture is given by a teacher Alice to a group of students around the world. The lecture was beginning at July, 29, 2013 2:00PM. The teacher will share her screen and voice with all the students in one-to-multiple mode. Only the teacher has the privilege to publish and change screen objects. In this scenario, students may discuss and raise questions through another screen content sharing session or other channels, e.g. on-line chat tools, emails. Or Alice can assign individual participant or group privilege to edit specific object(s).

As depicted in Figure 13, Alice publishes a screen description 1300 describing a desktop object, a MS PowerPoint 2007 window, and two voice objects. In addition, the shared screen contains three contents, HelloWorld.pptx, HelloWorld1.mp3 and HelloWorld2.mp3.

When the clients or screen content sharing control servers receive the screen description, they can retrieve the contents and render the shared screen. The audio and video objects will be played based on start time, PST and duration given in screen description for synchronization.

Alice makes the Power Point Window full-screen and publishes this change in description 1400A of Figure 14A. Upon notified of this change, each student can choose to apply this change or not.

Note that Alice uses a laptop with MS windows 7; while students may use various devices with different capacities and contexts. To bridge the gap, screen sharing control server has to trim and interpret the origin description to different version fitting different end hosts. In the scenario, the update described in Figure 14A is trimmed and interpreted into description 1400B for a laptop running Ubuntu 12 (a fat client with different context) in Figure 14B, and a Smart phone running Android OS and WPS Office (a thin client with an alternative application) in Figure 14C. In the trimmed and interpreted descriptions, screen content sharing control server suggests proper applications for each screen object, and changes some display attributes to fit different end hosts.

It is possible that a student is a zero client. In this case, encoded streaming video instead of descriptions will not be sent to the client, who later decodes streaming videos of pixel maps of the shared screen.

### On-line cooperation

Figure 15A depicts an exemplary screen description according to embodiments of the present invention. Screen description 1500A represents a multiple-to-multiple session in which each group may create, check and update content objects in a shared screen. For simplicity, in this example, participants are divided into two groups A and B. Group A has a participant Alice and Alice uses a laptop running MS windows 7.

Figure 15B depicts an exemplary screen description according to embodiments of the present invention. Screen description 1500B represents a response in a multiple-to-multiple session. As depicted, group B has a participant Bob using a smart phone running Android OS.

### On-line negotiation

With regard to Figure 16, an on-line negotiation is a multiple-to-multiple session. In the session, publisher can set privilege for each created object. For simplicity, there are two groups in the session, Company A and Company B, each of which has two group members. Alice and Bob are the representatives of Company A; while Charlie and Dave are the representatives of Company B. To better focus on the privilege management in screen description, it is assumed that assume all participants are running MS Windows with all required applications.

Alice shares her screen by publishing a complete description 1600 as depicted in Figure 16. In the description, she set the privilege for the object with ID "00150918" as visible by all participants in this session; while another object with ID "006504C6" is set as editable by members in company A.

Based on the privilege, the descriptions 1700A and 1700B are trimmed by screen content sharing control server for company A and company B as presented in Figure 17A and 17B, respectively. As shown in Figure 17B, the object with ID "006504C6" is removed from the description prepared for members in company B, so that members in company B even do not realized the existence of the object with ID "006504C6".

In this case, Alice uses a personal photo as her desktop wallpaper and wants to keep it private. She only gives the location for desktop and set it as not_Visible. Screen content sharing control server can fill any figure or color into the background based on each participant's settings. In this session, "sample.jpg" is filled in the object describing desktop. Meanwhile, the privilege of this object is changed as visible to all participants as shown in Figure 17A and 17B.

With regard to Figure 18, flowchart 1800 illustrating an exemplary method for sharing screen content is depicted according to embodiments of the present invention. The method begins at step 1801, where an interest message is received from a second client device at a control plane. At step 1802, a detailed description of an update message from a first client is received at the control plane comprising a screen description and a content description. The detailed description is sent to the second client device at step 1803. At step 1804, content from a service router is retrieved, wherein the content is described in the content description. Shared screen content is assembled at step 1805 based on the screen description and the content retrieved from the service router.

Embodiments of the present invention are thus described. While the present invention has been described in particular embodiments, it should be appreciated that the present invention should not be construed as limited by such embodiments, but rather construed according to the following claims.

## Claims

1. A method of sharing screen content performed by a system comprising a control plane (501), a service plane (503) and a data plane (502), wherein the method comprises the steps of:
• receiving, by the control plane (501), an update message comprising information about an update of screen content of a fat client (504) from the fat client (504);
• informing, by the control plane (501), a thin client (505) and a zero client (506) about the update;
• receiving, by the service plane (503), interest messages from the thin client (505) and the zero client;
• requesting, by the service plane (503), a detailed description about the update from the fat client (504), wherein the detailed description comprises a screen description and a content description;
• receiving, by the service plane (503), the detailed description about the update from the fat client (504);
• determining, by the service plane (503), whether the thin client (505) is able to assemble a shared screen being assembled based on the received screen description and the screen content described by the content description;
if yes, sending, by the service plane (503), the received detailed description to the thin client (505) and sending, by the data plane, the screen content to the thin client (505);
if no, trimming, by the service plane (503), the received detailed description based on a privilege of the thin client (505) and subsequently sending the trimmed detailed description to the thin client (505) and sending, by the data plane, the screen content to the thin client (505);
• determining, by the service plane (503), whether the zero client (506) is able to assemble the shared screen being assembled based on the received screen description and the screen content described by the content description;
if yes, sending, by the service plane (503), the received detailed description to the zero client (506) and sending, by the data plane (502), the screen content to the zero client (506);
if no, assembling, by the service plane (503), the shared screen based on the received screen description and the screen content received by the service plane (503) from the data plane (502); capturing, by the service plane (503), pixel maps of the shared screen in a sampling rate;
sending, by the service plane (503), the pixel maps as a streaming video to the zero client (506).

2. The method of claim 1, wherein mouse movements are the update of screen content.

3. A system comprising a control plane (501), a service plane (503) and a data plane (502), wherein the system comprises means configured to perform all the steps of the method according to claims 1 or 2.

4. The system of claim 3, wherein the update message comprises a timestamp and/or a hash of a description of the update of the screen content.

5. The system of claim 3, wherein the control plane, service plane, and data plane belong to an Information Centric Network, ICN.

6. The system of claim 3, wherein the detailed description comprises a tree structure that describes relationships among one or more on-screen content objects.

## Patentansprüche

1. Verfahren zur gemeinsamen Verwendung eines Bildschirminhalts, das von einem System durchgeführt wird, das eine Steuerebene (501), eine Dienstebene (503) und eine Datenebene (502) umfasst, wobei das Verfahren die folgenden Schritte umfasst:
• Empfangen einer Aktualisierungsnachricht, die Informationen über eine Aktualisierung eines Bildschirminhalts eines Fat-Clients (504) umfasst, durch die Steuerebene (501) vom Fat-Client (504);
• Informieren eines Thin-Clients (505) und eines Zero-Clients (506) über die Aktualisierung durch die Steuerebene (501);
• Empfangen von Interessensnachrichten durch die Dienstebene (503) vom Thin-Client (505) und vom Zero-Client;
• Anfordern einer detaillierten Beschreibung zur Aktualisierung durch die Dienstebene (503) beim Fat-Client (504), wobei die detaillierte Beschreibung eine Bildschirmbeschreibung und eine Inhaltsbeschreibung umfasst;
• Empfangen der detaillierten Beschreibung zur Aktualisierung durch die Dienstebene (503) vom Fat-Client (504);
• Bestimmen durch die Dienstebene (503), ob der Thin-Client (505) in der Lage ist, einen gemeinsam verwendeten Bildschirm aufzubauen, der auf Basis der empfangenen Bildschirmbeschreibung und des Bildschirminhalts, der von der Inhaltsbeschreibung beschrieben wird, aufgebaut wird;
wenn ja, Senden der empfangenen detaillierten Beschreibung durch die Dienstebene (503) an den Thin-Client (505) und Senden des Bildschirminhalts durch die Datenebene an den Thin-Client (505); wenn nein, Beschneiden der empfangenen detaillierten Beschreibung durch die Dienstebene (503) auf Basis eines Privilegs des Thin-Client (505) und anschließend Senden der beschnittenen detaillierten Beschreibung an den Thin-Client (505) und Senden des Bildschirminhalts durch die Datenebene an den Thin-Client (505);
• Bestimmen durch die Dienstebene (503), ob der Zero-Client (506) in der Lage ist, den gemeinsam verwendeten Bildschirm aufzubauen, der auf Basis der empfangenen Bildschirmbeschreibung und des Bildschirminhalts, der von der Inhaltsbeschreibung beschrieben wird, aufgebaut wird;
wenn ja, Senden der empfangenen detaillierten Beschreibung durch die Dienstebene (503) an den Zero-Client (506) und Senden des Bildschirminhalts durch die Datenebene (502) an den Zero-Client (506);
wenn nein, Aufbauen des gemeinsam verwendeten Bildschirms durch die Dienstebene (503) auf Basis der empfangenen Bildschirmbeschreibung und des Bildschirminhalts, der durch die Dienstebene (503) von der Datenebene (502) empfangen wurde; Erfassen von Pixelkarten des gemeinsam verwendeten Bildschirms mit einer Abtastrate durch die Dienstebene (503);
Senden der Pixelkarten als Streamingvideo durch die Dienstebene (503) an den Zero-Client (506).

2. Verfahren nach Anspruch 1, wobei die Aktualisierung des Bildschirminhalts Mausbewegungen sind.

3. System, das eine Steuerebene (501), eine Dienstebene (503) und eine Datenebene (502) umfasst, wobei das System Mittel umfasst, die dazu ausgelegt sind, alle Schritte des Verfahrens nach Anspruch 1 oder 2 durchzuführen.

4. System nach Anspruch 3, wobei die Aktualisierungsnachricht einen Zeitstempel und/oder einen Hash einer Beschreibung der Aktualisierung des Bildschirminhalts umfasst.

5. System nach Anspruch 3, wobei die Steuerebene, die Dienstebene und die Datenebene zu einem "Information Centric Network", ICN, gehören.

6. System nach Anspruch 3, wobei die detaillierte Beschreibung eine Baumstruktur umfasst, die Beziehungen zwischen einem oder mehreren Inhaltsobjekten auf dem Bildschirm beschreibt.

## Revendications

1. Procédé de partage d'un contenu d'écran, réalisé par un système comprenant un plan de contrôle (501), un plan de service (503) et un plan de données (502), le procédé comprenant les étapes consistant à :
recevoir, par le plan de contrôle (501), en provenance d'un client lourd (504), un message de mise à jour comprenant une information sur une mise à jour d'un contenu d'écran du client lourd (504) ;
informer, par le plan de contrôle (501), un client léger (505) et un client zéro (506) à propos de la mise à jour ;
recevoir, par le plan de service (503), des messages d'intérêt en provenance du client léger (505) et du client zéro ;
demander, par le plan de service (503), au client léger (504), une description détaillée sur la mise à jour, la description détaillée comprenant une description d'écran et une description de contenu ;
recevoir, par le plan de service (503), en provenance du client léger (504), la description détaillée sur la mise à jour ;
déterminer, par le plan de service (503), si le client léger (505) peut assembler un écran partagé assemblé sur la base de la description d'écran reçue et du contenu d'écran décrit par la description de contenu ;
si oui, envoyer, par le plan de service (503), la description détaillée reçue au client léger (505) et envoyer, par le plan de données, le contenu d'écran au client léger (505) ;
si non, rogner, par le plan de service (503), la description détaillée reçue sur la base d'un privilège du client léger (505), puis envoyer la description détaillée rognée au client léger (505) et envoyer, par le plan de données, le contenu d'écran au client léger (505) ;
déterminer, par le plan de service (503), si le client zéro (506) peut assembler l'écran partagé assemblé sur la base de la description d'écran reçue et du contenu d'écran décrit par la description de contenu ;
si oui, envoyer, par le plan de service (503), la description détaillée reçue au client zéro (506) et envoyer, par le plan de données (502), le contenu d'écran au client zéro (506) ;
si non, assembler, par le plan de service (503), l'écran partagé sur la base de la description d'écran reçue et du contenu d'écran reçu par le plan de service (503) en provenance du plan de données (502) ; capturer, par le plan de service (503), des tables de pixels de l'écran partagé dans un taux d'échantillonnage ;
envoyer, par le plan de service (503), les tables de pixels en tant que vidéo en continu au client zéro (506).

2. Procédé selon la revendication 1, dans lequel des mouvements de souris sont la mise à jour du contenu d'écran.

3. Système comprenant un plan de contrôle (501), un plan de service (503) et un plan de données (502), le système comprenant un moyen configuré pour réaliser toutes les étapes du procédé selon la revendication 1 ou 2.

4. Système selon la revendication 3, dans lequel le message de mise à jour comprend un horodatage et/ou un hachage d'une description de la mise à jour du contenu d'écran.

5. Système selon la revendication 3, dans lequel le plan de contrôle, le plan de service et le plan de donnés appartiennent à un réseau centré sur les informations (ICN).

6. Système selon la revendication 3, dans lequel la description détaillée comprend une structure arborescente qui décrit des relations parmi un ou plusieurs objets de contenu sur écran.
